Europäisches Patentamt

European Patent Office

Office européen des brevets

(11) Veröffentlichungsnummer: **0 464 358 A1**

## (12) EUROPÄISCHE PATENTANMELDUNG

(21) Anmeldenummer: **91108500.9**

(22) Anmeldetag: **25.05.91**

(51) Int. Cl.5: **F16B 21/16**, F16B 15/06, F16B 12/10

(30) Priorität: **04.07.90 DE 4021245**

(43) Veröffentlichungstag der Anmeldung:
**08.01.92 Patentblatt 92/02**

(84) Benannte Vertragsstaaten:
**AT BE CH DE DK ES FR GB GR IT LI LU NL SE**

(71) Anmelder: **SFS Stadler Holding AG**
**Nefenstrasse 30**
**CH-9435 Heerbrugg(CH)**

(72) Erfinder: **Svendson, Roar Oivind**
**Johan Castbergsvei 7B**
**N-0673 Oslo 6(NO)**

(54) Eindreh- und/oder einschlagbarer Befestiger zum Fixieren von Profilteilen.

(57) Ein eindreh- und/oder einschlagbarer Befestiger (1) dient zum Fixieren von Profilteilen (2) mit wenigstens einem in Richtung zum Befestigerkopf (8) abstehenden Steg (3). Am Schaft (5) des Befestigers (1) ist eine Rändelung (6) ausgebildet, deren Aussenabmessungen grösser sind als eine im zum befestigenden Profilteil (2) ausgebildete Bohrung (7), so dass der Profilteil (2) am Schaft (5) des Befestigers (1) form- und kraftschlüssig mit entsprechend der fertigen Setzlage zur Befestigerachse (4) ausgerichtetem Steg (3) vormontierbar ist. Der Profilteil (2) wird unverlierbar und kippsicher am Befestiger (1) gehalten.

Fig. 1

Die Erfindung betrifft einen eindreh- und/oder einschlagbaren Befestiger zum Fixieren von Profilteilen mit wenigstens einem in Richtung zum Befestigerkopf abstehenden Steg, Bügel, Bolzen oder dergleichen.

Es gibt eine Vielzahl von Befestigungsarten, bei welchen Profilteile mit einem abstehenden Steg, Bügel, Bolzen oder dergleichen mit einem Befestiger an einer Wand, an der Decke oder am Boden befestigt werden sollen. Meist werden diese Profilteile dann an Ort und Stelle auf den Befestiger aufgeschoben und durch Eindrehen oder Einschlagen des Befestigers fixiert. Damit sich diese Profilteile beim Befestigen nicht verdrehen, werden diese meist von Hand oder mit einer Zange gehalten, insbesondere dann, wenn es auf eine entsprechende Ausrichtung der Stege, Bügel, Bolzen oder dergleichen besonders ankommt.

Aus wirtschaftlichen Gründen ist man immer mehr bestrebt, gewisse Teile eindreh- und/oder einschlagbar vorzumontieren, so dass also die mit dem Befestiger zu fixierenden Profilteile bereits in einer Vormontage auf den Befestiger aufgesteckt und so zur Einsatzstelle gebracht werden. Gerade wenn es auf eine besondere Lage der an den Profilteilen abstehenden Stege, Bügel, Bolzen oder dergleichen ankommt und gegebenenfalls Werkzeuge an einer Eindreh- und/oder Einschlagvorrichtung vorhanden sind, um den Steg, Bügel, Bolzen oder dergleichen zu halten, dann ist es notwendig, dass die Profilteile bereits bei der Vormontage eine ordnungsgemässe Lage gegenüber dem Befestiger einnehmen.

Die vorliegende Erfindung hat sich daher zur Aufgabe gestellt, eine Möglichkeit zu schaffen, mit der jeweils ein Befestiger und der zu fixierende Profilteil in gegenseitig fixierter und unverlierbarer Lage vormontiert werden können.

Erfindungsgemäss wird dazu vorgeschlagen, dass am Schaft des Befestigers eine oder mehrere, über den Durchmesser des Schaftes vorspringende Erhebungen, Riefen, eine Rändelung, eine Verzahnung oder dergleichen ausgebildet sind, deren Aussenabmessungen grösser sind als eine im zu befestigenden Profilteil ausgebildete Oeffnung bzw. Bohrung, so dass der Profilteil am Schaft des Befestigers form- und kraftschlüssig mit entsprechend der fertigen Setzlage zur Befestigerachse ausgerichtetem Steg, Bügel, Bolzen oder dergleichen vormontierbar ist.

Durch die erfindungsgemässe Ausbildung wird also nicht nur eine gegenseitige unverlierbare Fixierung zwischen dem Befestiger und dem Profilteil geschaffen, die bis zur endgültigen Fixierung des Profilteils an einem Bauteil erhalten bleibt, sondern es ist auch die Gewähr gegeben, dass die vom Profilteil abstehenden Stege, Bügel, Bolzen oder dergleichen in exakter Montagelage zur Befestigerachse ausgerichtet sind, so dass sie von einem entsprechenden Werkzeug an einer Vorrichtung zum Eindrehen und/oder Einschlagen des Befestigers sicher und exakt ausgerichtet erfasst werden können.

Durch die erfindungsgemässen Massnahmen wird der Profilteil also so an der Oberfläche des Schaftes des Befestigers gehalten, dass er gegenüber der Befestigerachse nicht mehr kippen kann. Es ist also in einfacher Weise eine werksseitige Vormontage von Befestiger und Profilteil möglich, wobei die gegenseitig unverlierbare und exakt ausgerichtete Lage zwischen Befestiger und Profilteil auch auf dem Transport und bis zum endgültigen Setzen an einem entsprechenden Bauteil erhalten bleibt.

Eine solche exakte Ausrichtung ist aber nicht nur dann von Vorteil, wenn der Befestiger mit einer Vorrichtung eingedreht oder eingeschlagen wird, sondern auch dann, wenn der Befestiger mit einem Hammer eingeschlagen oder mit einem Schraubenzieher oder Schlüssel eingedreht wird. Auch dann ist es vorteilhaft, wenn vom Profilteil abstehende Stege, Bügel, Bolzen oder dergleichen bereits in der endgültigen Lage zur Befestigerachse ausgerichtet sind.

Eine sehr einfache konstruktive Ausgestaltung ist dann gegeben, wenn am Schaft unterhalb des Befestigerkopfes eine umfangsgeschlossene Rändelung in Form einer achsparallel zum Befestiger verlaufenden Verzahnung vorgesehen ist. Es ist dadurch ein praktisch umfangsgeschlossener Eingriff der Verzahnung in die Wandung der Oeffnung bzw. Bohrung im Profilteil gewährleistet, so dass eine exakte Kippsicherung des Profilteils gegenüber der Befestigerachse vorliegt.

Eine weitere Ausführungsvariante sieht vor, dass die Erhebungen am Schaft des Befestigers von wenigstens drei achsparallel zur Befestigerachse an der Schaftoberfläche ausgebildeten, auf dem Schaftumfang verteilt angeordneten Rippen gebildet sind. Es hat sich bei Versuchen gezeigt, dass eine solche Halterung des Profilteils am Befestiger eine ausreichende Kippsicherheit und somit eine unverlierbare Halterung mit sich bringt. Gerade bei der Herstellung der Befestiger in einem Umformverfahren erweist sich eine solche Ausbildung mit Rippen als besonders vorteilhaft, da sie bereits bei der Fertigung der Befestiger in einem Arbeitsgang hergestellt werden kann.

Dabei ist es vorteilhaft, wenn die Rippen im Querschnitt halbkreisförmig oder dreieckig ausgebildet sind. Dadurch liegen jeweils z.B. bei drei am Umfang verteilten Rippen die äussersten Begrenzungen der Rippen linienförmig an der Innenwandung der Oeffnung bzw. Bohrung im Profilteil an, so dass eine sichere Halterung gewährleistet wird.

In diesem Zusammenhang ist es auch zweckmässig, wenn die Rippen an ihrem, dem Befestigerkopf abgewandten Ende schräg zur Schaftoberfläche hin auslaufen. Dadurch können die Profilteile sehr einfach auf den Befestiger aufgeschoben werden, da sich die Rippen dann allmählich erhohen und somit eine exakte zentrische Einfädelung der Profilteile ermöglicht wird. Es greifen dadurch dann alle am Umfang verteilt angeordneten Rippen mit exakt verteilten Kräften an der Innenwandung der Oeffnung bzw. Bohrung an.

Nach einer anderen Ausführungsform ist vorgesehen, dass die Erhebungen, Riefen, Rändelung, Verzahnung oder dergleichen am Schaft mit Abstand von der Unterseite des Befestigerkopfes beginnen und über einen Bereich geführt sind, welcher länger ist als die Dicke des zu befestigenden Profilteils. Da die Profilteile mit Abstand vom Befestigerkopf auf dem Schaft des Befestigers vormontiert werden, genügt es insbesondere dann, wenn eine nachträgliche Bearbeitung, z.B. durch Anbringung einer Rändelung oder Verzahnung, notwendig ist, wenn dieser entsprechende Bereich nur über einen kurzen Abschnitt des Schaftes und zudem auch mit Abstand von der Unterseite des Befestigerkopfes beginnend angeordnet ist. Gerade durch den entsprechenden Abstand des Profilteils vom Befestigerkopf ist stets ein einwandfreies Erfassen des Befestigerkopfes durch eine Einschlag- bzw. Einschraubnuss gewährleistet.

Insbesondere dann, wenn der Profilteil unter Umständen nicht bis zu einer fixierten Lage am Unterbau befestigt werden soll, wenn sich also der Profilteil auch nach der Fixierung am entsprechenden Bauteil noch etwas verdrehen lassen soll, ist es zweckmässig, wenn der Abstand des Beginns der Erhebungen, Riefen, Rändelung, Verzahnung oder dergleichen von der Unterseite des Befestigerkopfes annähernd der Dicke des zu befestigenden Profilteils entspricht. Es ist also dann, wenn der Profilteil direkt unterhalb des Befestigerkopfes liegt, ein Verdrehen des Profilteils gegenüber dem Befestiger möglich.

Eine weitere Ausführungsvariante sieht vor, dass die Erhebungen, Riefen, Rändelung, Verzahnung oder dergleichen in Achsrichtung des Schaftes des Befestigers gesehen ein- oder mehrfach unterbrochen sind bzw. ist, wobei die unterbrochenen Bereich(e) mindestens der Dicke des zu befestigenden Profilteils entspricht bzw. entsprechen. Dadurch lässt sich der zu befestigende Profilteil in entsprechendem Abstand vom Befestigerkopf unverlierbar fixieren, wobei jedoch trotzdem die Möglichkeit gegeben ist, den Profilteil gegenüber dem Befestiger zu verdrehen.

Weitere erfindungsgemässe Merkmale und besondere Vorteile werden in der nachstehenden Beschreibung anhand der Zeichnungen noch näher erläutert. Es zeigen:

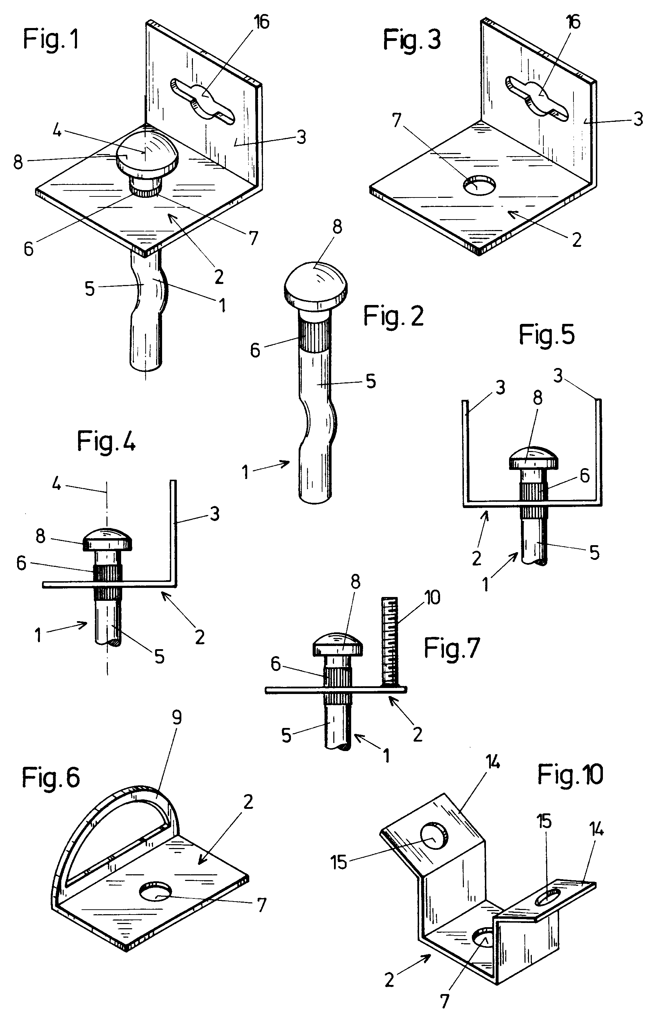

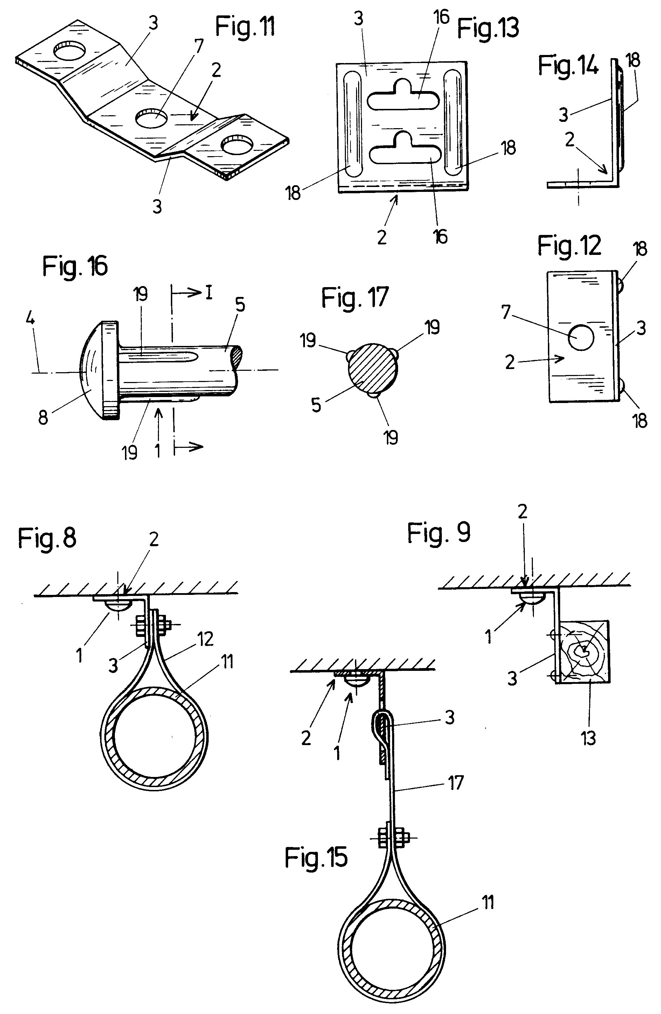

Fig. 1
eine Schrägsicht eines Profilteils mit einem eingesetzten Befestiger;
Fig. 2
den Befestiger in Schrägsicht;
Fig. 3
das Profilteil in Schrägsicht;
Fig. 4
eine Seitenansicht entsprechend Fig. 1;
Fig. 5 bis 7
verschiedene Ausführungsvarianten eines an einem Befestiger angeordneten Profilteils;
Fig. 8 und 9
zwei Anwendungsbeispiele für einen Profilteil, der mit einem Befestiger fixiert ist;
Fig. 10 und 11
zwei weitere Ausführungsformen von Profilteilen;
Fig. 12 bis 14
einen weiteren Profilteil in drei verschiedenen Ansichten;
Fig. 15
ein Einsatzbeispiel eines Profilteils gemäss den Fig. 12 bis 14;
Fig. 16
eine Seitenansicht eines Abschnittes eines Befestigers mit einer gegenüber Fig. 2 anderen Ausführungsform;
Fig. 17
einen Schnitt nach der Linie I-I in Fig. 16.

In der nachstehenden Beschreibung und in den Zeichnungen wird von einem einschlagbaren Befestiger 1 ausgegangen. Die erfindungsgemässen Massnahmen lassen sich nicht nur auf die hier dargestellten Befestiger 1 anwenden, sondern generell auch für jede Art von Schussbefestigern oder sonstigen einschlagbaren Befestigern, aber auch für Befestiger in Form von Schrauben, selbstbohrenden Schrauben usw.

Es geht also darum, einen eindreh- und/oder einschlagbaren Befestiger 1 mit einem zu befestigenden Profilteil 2 gegenseitig unverlierbar vorzumontieren, wobei vom Profilteil 2 abstehende Stege 3 entsprechend der fertigen Setzlage zur Befestigerachse 4 ausgerichtet sind. Am Schaft 5 des Befestigers 1 ist eine Rändelung 6 ausgebildet, deren Aussenabmessungen grösser sind als die im zu befestigenden Profilteil 2 ausgebildete Bohrung 7. Wenn also der Profilteil 2 auf den Befestiger aufgeschoben wird, wird dieser Profilteil 2 am Schaft 5 form- und kraftschlüssig gehalten und ist daher unverlierbar mit dem Befestiger 1 verbunden. Ausserdem ist der vom Profilteil 2 abstehende Steg 3 bereits in dieser vormontierten Stellung in einer Lage gegenüber der Befestigerachse 4, welche der fertigen Setzlage des Profilteils 2 entspricht. Bei einem rechtwinklig vom Profilteil 2 abstehenden Steg 3 liegt dieser also achsparallel zur Befestigerachse 4 ausgerichtet.

Die umfangsgeschlossene Rändelung 6 kann zweckmässig in Form einer achsparallel zum Befestiger verlaufenden Verzahnung vorgesehen sein, welche sich beim Aufschieben des Profilteils 2 in die Wandung der Bohrung 7 eingräbt.

Anstelle einer Rändelung können am Schaft 5 des Befestigers 1 auch verschiedene Erhebungen, Riefen, eine besondere Verzahnung oder dergleichen vorgesehen werden. Es muss lediglich sichergestellt sein, dass der Profilteil 2 kippsicher gegenüber der Befestigerachse 4 und unverlierbar gegenüber dem Befestiger 1 gehalten ist.

Bei den in den Fig. 1, 2, 4, 5 und 7 gezeigten Beispielen beginnt die Rändelung 6 mit Abstand von der Unterseite des Befestigerkopfes 8 und führt über einen Bereich am Befestigerschaft, welcher länger ist als die Dicke des zu befestigenden Profilteils 2. Es ist also eine sichere Halterung des Profilteils 2 am Befestiger 1 gewährleistet. Bezüglich des Abstandes zwischen der Unterseite des Befestigerkopfes 8 und dem Beginn der Rändelung 6 am Schaft 5 ist es zweckmässig, wenn dieser Abstand annähernd der Dicke des zu befestigenden Profilteils 2 entspricht. Eine solche Variante ist dann zweckmässig, wenn der Profilteil 2 nach dem Fixieren an einem entsprechenden Bauteil noch verdreht werden soll. Dies setzt dann natürlich voraus, dass der Befestiger 1 nicht zur Gänze eingeschlagen bzw. eingedreht wird. Es ist aus den Fig. 5 bis 7 ersichtlich, dass die Profilteile 2 verschiedene Ausführungsformen haben können. So ist beispielsweise der Profilteil 2 gemäss Fig. 5 im wesentlichen als U-Profil ausgebildet, weist also zwei mit Abstand parallel zueinander verlaufende Stege 3 auf. Bei der Ausführung nach Fig. 6 ist anstelle des Steges 3 bei den vorhergehenden Ausführungsformen am Profilteil 2 ein abstehender Bügel 9 vorgesehen. Am Profilteil 2 kann aber auch, wie dies in Fig. 7 gezeigt ist, beispielsweise ein Bolzen 10 angeschweisst sein, der auch als Gewindebolzen ausgeführt sein könnte. An diesem Profilteil 2 können auch, je nach Einsatzzweck des Profilteils 2, mehrere solcher Bolzen 10 in Reihe oder versetzt zueinander angeordnet werden. In den Fig. 8 und 9 sind zwei Einsatzbeispiele gezeigt, wie ein Befestiger mit dem entsprechenden Profilteil 2 eingesetzt werden kann. Bei der Ausführung nach Fig. 8 geht es um die Aufhängung einer Rohrleitung 11 mittels eines Bandes 12 und bei der Ausführung nach Fig. 9 um die Befestigung eines abgehängten Balkens 13 bzw. eines entsprechenden anderen Profils.

Zusätzlich oder anstelle des freien Bereiches unterhalb des Schraubenkopfes kann auch vorgesehen werden, dass die Erhebungen 19, Riefen, Rändelung 6, Verzahnung oder dergleichen in Achsrichtung des Schaftes 5 des Befestigers 1 gesehen ein- oder mehrfach unterbrochen ist bzw.

sind. Diese unterbrochenen Bereiche bzw. der unterbrochene Bereich entspricht dann mindestens der Dicke des zu befestigenden Profilteils, so dass an sich eine Lageorientierung des Profilteils gegenüber dem Befestiger möglich ist, jedoch trotzdem ein Verdrehen des Profilteils gegenüber dem Befestiger erfolgen kann.

Bei der Ausführung nach den Fig. 10 und 11 ist ersichtlich, dass die Stege 3 des Profilteils 2 verschiedene Formen und Ausführungsvarianten aufweisen können. Nach der Ausführung nach Fig. 10 ist es beispielsweise möglich, dass nach dem Fixieren des Profilteils 2 die beiden schräg auskragenden Laschen 14 der Stege 3 zusammengedrückt werden, so dass die beiden Laschen 14 mit gegenseitig übereinstimmender Bohrung 15 zur Aufhängung eines entsprechenden Teils bzw. zum Durchstecken einer Schraubverbindung oder eines Drahtes dienen.

Bei der Ausgestaltung nach den Fig. 12 bis 14 geht es wiederum um eine besondere Ausführungsform eines Profilteils 2, wobei hier am Steg 3 des Profilteils 2 gegenüber der nur einen Oeffnung 16 gemäss Fig. 1 zwei Oeffnungen 16 vorgesehen sind, so dass ein solcher Profilteil 2 zum Einfädeln einer Aufhängelasche 17 (siehe Fig. 15) eingesetzt werden kann. Zur Verstärkung des Steges 3 können dabei Verstärkungssicken 18 oder Rippen vorgesehen werden.

Eine gegenuber der Rändelung 6 am Schaft 5 des Befestigers 1 andere Ausführungsform ist in den Fig. 16 und 17 aufgezeigt. Hier sind Erhebungen 19 am Schaft 5 des Befestigers 1 vorgesehen, wobei diese Erhebungen 19 von wenigstens drei achsparallel zur Befestigerachse 4 an der Schaftoberfläche ausgebildeten Rippen gebildet sind, welche zweckmässig auf dem Schaftumfang verteilt angeordnet werden. Diese Erhebungen 19 beginnen direkt an der Unterseite des Befestigerkopfes 8, so dass auch in der fertigen Setzlage eine Verdrehsicherung für den Profilteil 2 gegeben ist. Eine solche Ausführung ist natürlich auch bei Anordnung einer Rändelung 6 oder bei einer entsprechenden Verzahnung oder dergleichen sowie bei der Ausbildung von Riefen möglich.

Um einen guten Eingriff dieser Erhebungen 19 an der Begrenzung der Bohrung 7 zu erreichen, sind die Rippen im Querschnitt halbkreisförmig oder dreieckig ausgebildet. Zum leichteren Einführen des Profilteils 2 auf den Schaft 5 des Befestigers 1 ist es vorteilhaft, wenn diese als Rippen ausgebildeten Erhebungen 19 an ihrem, dem Befestigerkopf 8 abgewandten Ende schräg zur Schaftoberfläche hin auslaufen.

Im Rahmen der Erfindung wären auch andere Konstruktionsvarianten denkbar, wobei hier nur einige wesentliche Ausführungsformen dargestellt und erläutert wurden. Es sind aber auch alle Ausführungsformen erfasst, bei denen am Schaft des Befestigers Erhebungen, Riefen, eine Rändelung, eine Verzahnung oder dergleichen ausgebildet sind, die zur form- und kraftschlüssigen Halterung eines aufgeschobenen Profilteils dienen und diesen in vormontierter Lage kippsicher und unverlierbar halten.

**Patentansprüche**

1. Eindreh- und/oder einschlagbarer Befestiger zum Fixieren von Profilteilen mit wenigstens einem in Richtung zum Befestigerkopf abstehenden Steg, Bügel, Bolzen oder dergleichen, dadurch gekennzeichnet, dass am Schaft (5) des Befestigers (1) eine oder mehrere, über den Durchmesser des Schaftes (5) vorspringende Erhebungen (19), Riefen, eine Rändelung (6), eine Verzahnung oder dergleichen ausgebildet sind, deren Aussenabmessungen grösser sind als eine im zu befestigenden Profilteil (2) ausgebildete Oeffnung bzw. Bohrung (7), so dass der Profilteil (2) am Schaft (5) des Befestigers (1) form- und kraftschlüssig mit entsprechend der fertigen Setzlage zur Befestigerachse (4) ausgerichtetem Steg (3), Bügel (9), Bolzen (10) oder dergleichen vormontierbar ist.

2. Befestiger nach Anspruch 1, dadurch gekennzeichnet, dass am Schaft (5) unterhalb des Befestigerkopfes (8) eine umfangsgeschlossene Rändelung (6) in Form einer achsparallel zum Befestiger (1) verlaufenden Verzahnung vorgesehen ist.

3. Befestiger nach Anspruch 1, dadurch gekennzeichnet, dass die Erhebungen (19) am Schaft (5) des Befestigers (1) von wenigstens drei achsparallel zur Befestigerachse (4) an der Schaftoberfläche ausgebildeten, auf dem Schaftumfang verteilt angeordneten Rippen gebildet sind.

4. Befestiger nach Anspruch 3, dadurch gekennzeichnet, dass die Rippen im Querschnitt halbkreisförmig oder dreieckig ausgebildet sind.

5. Befestiger nach den Ansprüchen 3 und 4, dadurch gekennzeichnet, dass die Rippen an ihrem, dem Befestigerkopf (8) abgewandten Ende schräg zur Schaftoberfläche hin auslaufen.

6. Befestiger nach den Ansprüchen 1 und 2, dadurch gekennzeichnet, dass die Erhebungen (19), Riefen, Randelung (6), Verzahnung oder dergleichen am Schaft (5) mit Abstand von der Unterseite des Befestigerkopfes (8) beginnen und über einen Bereich geführt sind, welcher länger ist als die Dicke des zu befestigenden Profilteils (2).

7. Befestiger nach Anspruch 6, dadurch gekennzeichnet, dass der Abstand des Beginns der Erhebungen (19), Riefen, Rändelung (6), Verzahnung oder dergleichen von der Unterseite des Befestigerkopfes (8) annähernd der Dicke des zu befestigenden Profilteils (2) entspricht.

8. Befestiger nach den Ansprüchen 1 und 2, dadurch gekennzeichnet, dass die Erhebungen (19), Riefen, Rändelung (6), Verzahnung oder dergleichen in Achsrichtung des Schaftes (5) des Befestigers (1) gesehen ein- oder mehrfach unterbrochen sind bzw. ist, wobei die unterbrochenen Bereich(e) mindestens der Dicke des zu befestigenden Profilteils (2) entspricht bzw. entsprechen.

Fig.1

Fig.3

Fig.2

Fig.5

Fig.4

Fig.7

Fig.6

Fig.10

Fig.11

Fig.13

Fig.14

Fig.16

Fig.17

Fig.12

Fig.8

Fig.9

Fig.15

7

## DOCUMENTS CONSIDERED TO BE RELEVANT

EP 91108500.9

| Category | Citation of document with indication, where appropriate, of relevant passages | Relevant to claim | CLASSIFICATION OF THE APPLICATION (Int. Cl.5) |
|---|---|---|---|
| A | DE - B2 - 2 451 060 (SCHÜRMANN & HILLEKE) * Fig. 1,2,5 * | 1,2,3, 4,5,6, 8 | F 16 B 21/16 F 16 B 15/06 F 16 B 12/10 |
| A | DE - A1 - 2 546 514 (HUWIL-WERKE GMBH) * Fig. * | 1 | |
| A | GB - A - 1 271 253 (HUCK MANUFACTURING COMPANY) * Fig. 2,3 * | 1,2,3, 6 | |
| A | DE - A1 - 2 446 143 (ILLINOIS TOOL WORKS INC.) * Fig. 2,3 * | 1 | |

TECHNICAL FIELDS
SEARCHED (Int. Cl.5)

F 16 B 12/00
F 16 B 15/00
F 16 B 17/00
F 16 B 19/00
F 16 B 21/00

The present search report has been drawn up for all claims

| Place of search | Date of completion of the search | Examiner |
|---|---|---|
| WIEN | 06-08-1991 | RIEMANN |